Europäisches Patentamt

European Patent Office

Office européen des brevets

(11) Veröffentlichungsnummer: **0 442 464 A1**

## (12) EUROPÄISCHE PATENTANMELDUNG

(21) Anmeldenummer: **91102005.5**

(22) Anmeldetag: **13.02.91**

(51) Int. Cl.⁵: **H02G 11/02, H01R 13/72**

(30) Priorität: **13.02.90 DE 9001683 U**

(43) Veröffentlichungstag der Anmeldung:
**21.08.91 Patentblatt 91/34**

(84) Benannte Vertragsstaaten:
**AT BE CH DE DK ES FR GB GR IT LI LU NL SE**

(71) Anmelder: **WIK
Elektro-Hausgeräte-Vertriebsgesellschaft
mbH & Co.
Produktions-Kommanditgesellschaft
Neustrasse 164
W-4300 Essen 11(DE)**

(72) Erfinder: **Becker, Dietmar
Neustrasse 6
W-5608 Radevormwald(DE)**

(74) Vertreter: **Gesthuysen, Hans Dieter, Dipl.-Ing.
et al
Patentanwälte Gesthuysen + von Rohr
Huyssenallee 15 Postfach 10 13 33
W-4300 Essen 1(DE)**

(54) **Kabelaufwickelelement für ein elektrisches Gerät.**

(57) Dargestellt und beschrieben ist ein Kabelaufwikkelelement (1) für ein elektrisches Gerät, insbesondere für ein Haarpflegegerät, wobei zu dem elektrischen Gerät ein Gerätegehäuse, mindestens ein in dem Gerätegehäuse vorgesehener elektrischer Verbraucher, z. B. ein Gebläsemotor und/oder eine Heizung, und ein innerhalb des Gerätegehäuses an den elektrischen Verbraucher angeschlossenes, aus dem Gerätegehäuse herausgeführtes Anschlußkabel (2) gehören.

Erfindungsgemäß kann dann, wenn das elektrische Gerät nicht gebraucht wird, das Anschlußkabel (2) besonders einfach "ordentlich" untergebracht werden, und zwar dadurch, daß das Kabelaufwickelelement (1) aus zwei gelenkig miteinander verbundenen, an ihren dem Gelenkpunkt (3) fernen Enden miteinander verbindbaren Schalen (4, 5) besteht.

Fig.3

EP 0 442 464 A1

## KABELAUFWICKELELEMENT FÜR EIN ELEKTRISCHES GERÄT

Die Erfindung betrifft ein Kabelaufwickelelement für ein elektrisches Gerät, insbesondere ein Haarpflegegerät, mit einem Gerätegehäuse, mit mindestens einem in dem Gerätegehäuse vorgesehenen elektrischen Verbraucher, z. B. einem Gebläsemotor und oder einer Heizung, und mit einem innerhalb des Gerätegehäuses an den elektrischen Verbraucher angeschlossenen, aus dem Gerätegehäuse herausgeführten Anschlußkabel.

Elektrische Geräte, insbesondere Haarpflegegeräte, z. B. elektrische Haartrockner, sind seit Jahrzehnten in vielen Ausführungsformen bekannt. Gemeinsam ist diesen elektrischen Geräten, daß dann, wenn sie nicht gebraucht werden, das aus dem Gerätegehäuse herausgeführte Anschlußkabel "stört"; das Anschlußkabel wird entweder - mehr oder weniger gut - einfach um das elektrische Geräte gewickelt oder es liegt - mehr oder weniger "ordentlich" - einfach in der Nähe des elektrischen Gerätes.

Der Erfindung liegt folglich die Aufgabe zugrunde, ein für ein elektrisches Gerät der in Rede stehenden Art besonders geeignetes Kabelaufwickelement anzugeben, - so daß dann, wenn das elektrische Gerät nicht gebraucht wird, das Anschlußkabel dieses elektrischen Gerätes besonders einfach "ordentlich" untergebracht werden kann.

Das erfindungsgemäße Kabelaufwickelement ist nun zunächst und im wesentlichen gekennzeichnet durch zwei gelenkig miteinander verbundene, an ihren dem Gelenkpunkt fernen Enden miteinander verbindbare Schalen. Erfindungsgemäß ist also ein Kabelaufwickelelement geschaffen, das zunächst in geöffnetem Zustand mit dem Anschlußkabel eines elektrischen Gerätes bewickelt werden kann, das nach dem Bewickeln mit dem Anschlußkabel eines elektrischen Gerätes geschlossen werden kann und das dann gleichsam funktional zugeordneter Bestandteil des entsprechenden elektrischen Gerätes ist.

Im einzelnen gibt es nun verschiedene Möglichkeiten, das erfindungsgemäße Kabelaufwickelement auszugestalten und weiterzubilden. Dies wird im folgenden in Verbindung mit der Zeichnung, die ein bevorzugtes Ausführungsbeispiel zeigt, näher erläutert. In der Zeichnung zeigen

Fig. 1 eine Seitenansicht eines erfindungsgemäßen Kabelaufwickelelements in geöffnetem Zustand, mit bereits aufgewickeltem Anschlußkabel,

Fig. 2 das Kabelaufwickelelement nach Fig. 1, in geschlossenem Zustand, und

Fig. 3 das in den Fig. 1 und 2 dargestellte Kabelaufwickelelement, in geöffnetem Zustand, ohne ein aufgewickeltes Anschlußkabel.

Das in den Figuren dargestellte Kabelaufwickelelement 1 ist für ein elektrisches Gerät, insbesondere ein Haarpflegegerät, bestimmt, wobei zu dem im übrigen nicht dargestellten elektrischen Gerät ein Gerätegehäuse, mindestens ein in dem Gerätegehäuse vorgesehener elektrischer Verbraucher, z. B. ein Gebläsemotor und/oder eine Heizung, und ein innerhalb des Gerätegehäuses an den elektrischen Verbraucher angeschlossenes, aus dem Gerätegehäuse herausgeführtes Anschlußkabel 2 gehören.

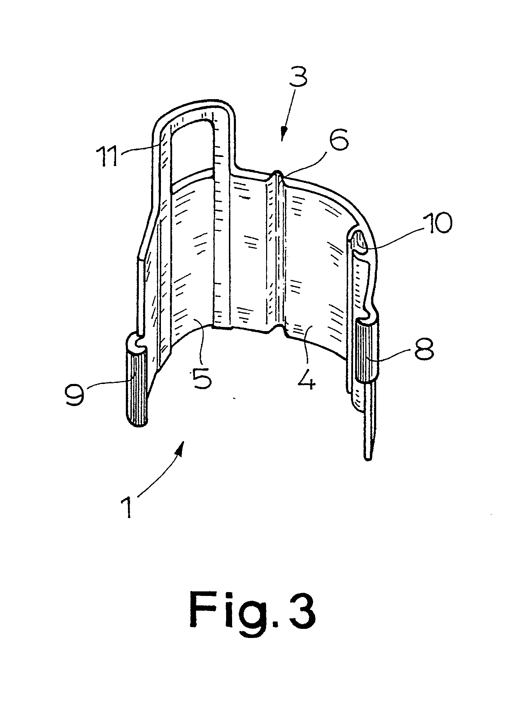

Das in den Figuren dargestellte Kabelaufwickelelement 1 ist zunächst, wie insbesondere Fig. 3 zeigt, gekennzeichnet durch zwei gelenkig miteinander verbundene, an ihren dem Gelenkpunkt 3 fernen Enden miteinander verbindbare Schalen 4, 5.

Im dargestellten Ausführungsbeispiel gilt für das erfindungsgemäße Kabelaufwickelelement 1, daß die Schalen 4, 5 durch ein Filmscharnier 6 miteinander verbunden und an ihren dem Gelenkpunkt 3 fernen Enden durch einen Clip-Verschluß 7 miteinander verbindbar sind. Dabei besteht der Clip-Verschluß 7 aus zwei Verschlußhälften 8, 9, wobei eine Verschlußhälfte 8 an einer Schale 4 und die andere Verschlußhälfte 9 an der anderen Schale 5 verwirklicht ist.

Im übrigen zeigen die Figuren insoweit eine bevorzugte Ausführungsform des erfindungsgemäßen Kabelaufwickelelements 1, als die Schale 4 eine geschlitzte Kabelkammer 10 und die Schale 5 eine Aufhängeöse 11 aufweisen.

Schließlich sei noch darauf hingewiesen, daß bei dem erfindungsgemäßen Kabelaufwickelement 1 die Schalen 4, 5 vorzugsweise aus einem elastischen Werkstoff bestehen und daß das Kabelaufwickelelement 1 insgesamt als einteiliges Spritzgußteil ausgeführt ist.

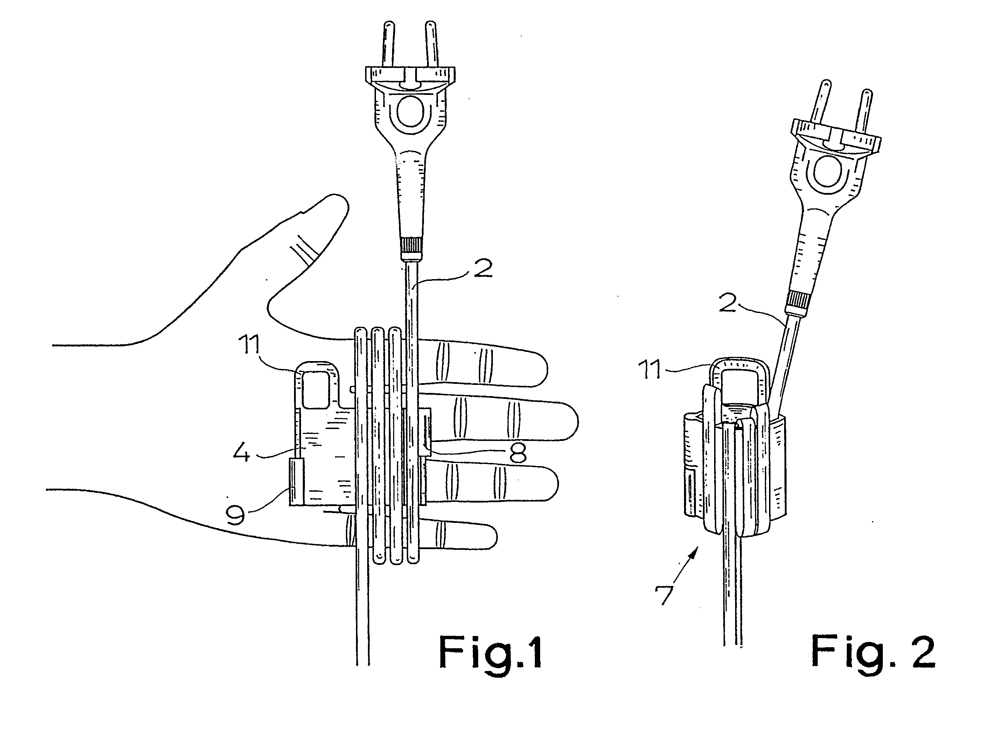

In Fig. 1 ist angedeutet, wie man zweckmäßigerweise mit dem erfindungsgemäßen Kabelaufwickelelement 1 arbeitet, indem man nämlich das Kabelaufwickelelement 1 in geöffnetem Zustand in die linke Hand legt und dann mit der rechten Hand das Anschlußkabel 2 um das Kabelaufwickelelement 1 und um die Hand herumwikkelt. Nach dem Aufwickeln des Anschlußkabels 2 und dem Herausziehen der Hand aus dem aufgewickelten Anschlußkabel 2 wird das Kabelaufwickelelement 1 geschlossen. Nunmehr ist das Kabelaufwickelelement 1 über das Anschlußkabel 2 funktionaler Bestandteil des im übrigen nicht dargestellten elektrischen Gerätes. Dadurch, daß das Kabelaufwickelelement 1 eine Aufhängeöse 11 aufweist, kann das elektrische Gerät, zu dem das Anschlußkabel 2 gehört, mit Hilfe des erfindungsgemäßen Kabelaufwickelelements 1 bequem aufgehangen werden.

## Patentansprüche

1. Kabelaufwickelelement für ein elektrisches Gerät, insbesondere ein Haarpflegegerät, mit einem Gerätegehäuse, mit mindestens einem in dem Gerätegehäuse vorgesehenen elektrischen Verbraucher, z. B. einem Gebläsemoter und/oder einer Heizung, und mit einem innerhalb des Gerätegehäuses an den elektrischen Verbraucher angeschlossenen, aus dem Gerätegehäuse herausgeführten Anschlußkabel, **gekennzeichnet durch** zwei gelenkig miteinander verbundene, an ihren dem Gelenkpunkt (3) fernen Enden miteinander verbindbare Schalen (4, 5).

2. Kabelaufwickelelement nach Anspruch 1, dadurch gekennzeichnet, daß die Schalen (4,5) durch ein Filmscharnier (6) miteinander verbunden sind.

3. Kabelaufwickelelement nach Anspruch 1 oder 2, dadurch gekennzeichnet, daß die Schalen (4, 5) an ihren dem Gelenkpunkt (3) fernen Enden durch einen Clip-Verschluß (7) miteinander verbindbar sind.

4. Kabelaufwickelelement nach Anspruch 3, dadurch gekennzeichnet, daß der Clip-Verschluß (7) aus zwei Verschlußhälften (8, 9) besteht.

5. Kabelaufwickelelement nach Anspruch 4, dadurch gekennzeichnet, daß eine Verschlußhälfte (8) an einer Schale (4) und die andere Verschlußhälfte (9) an der anderen Schale (5) verwirklicht ist.

6. Kabelaufwickelelement nach einem der Ansprüche 1 bis 5, dadurch gekennzeichnet, daß mindestens eine Schale (4) eine geschlitzte Kabelkammer (10) aufweist.

7. Kabelaufwickelelement nach einem der Ansprüche 1 bis 6, dadurch gekennzeichnet, daß mindestens eine Schale (5) eine Aufhängeöse (11) oder einen Aufhängehaken aufweist.

8. Kabelaufwickelelement nach einem der Ansprüche 1 bis 7, dadurch gekennzeichnet, daß die Schalen (4, 5) aus einem elastischen Werkstoff bestehen.

9. Kabelaufwickelelement nach einem der Ansprüche 1 bis 8, dadurch gekennzeichnet, daß es als einteiliges Spritzgußteil ausgeführt ist.

Fig. 2

Fig.1

# Fig.3

Europäisches
Patentamt

**EUROPÄISCHER
RECHERCHENBERICHT**

Nummer der Anmeldung

**EP 91 10 2005**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 336 654 (D.E. ROWLAND) <br> * Ansprüche 1-3; Figuren 1-4 * <br> — — — | 1,8 | H 02 G 11/02 <br> H 01 R 13/72 |
| A | US-A-3 197 830 (R.B. HOADLEY) <br> * Figuren 1-6 * <br> — — — | 1,6-9 | |
| A | FR-A-2 528 250 (CEMREP) <br> * Anspruch 1; Figur 1 * <br> — — — | 1 | |
| P,X | DE-U-9 001 683 (WIK) <br> * das ganze Dokument * <br> — — — — — | 1-9 | |

|  |  |  | RECHERCHIERTE SACHGEBIETE (Int. Cl.5) |
|---|---|---|---|
| | | | H 02 G <br> H 01 R <br> F 16 L |

Der vorliegende Recherchenbericht wurde für alle Patentansprüche erstellt

| Recherchenort | Abschlußdatum der Recherche | Prüfer |
|---|---|---|
| Den Haag | 24 Mai 91 | LOMMEL A. |